# EUROPÄISCHE PATENTSCHRIFT

(11) **EP 1 232 518 B1**
(45) Veröffentlichungstag und Bekanntmachung des Hinweises auf die Patenterteilung: **29.11.2006**
(21) Anmeldenummer: 01976018.0
(22) Anmeldetag: 05.09.2001
(51) Int. Cl.: H01J 65/04

(54) **ENTLADUNGSLAMPE FÜR DIELEKTRISCH BEHINDERTE ENTLADUNGEN MIT STÜTZELEMENTEN ZWISCHEN EINER BODENPLATTE UND EINER DECKENPLATTE**
DISCHARGE LAMP FOR DIELECTRICALLY IMPEDED DISCHARGES COMPRISING SUPPORTING ELEMENTS BETWEEN A BOTTOM PLATE AND A COVER PLATE
LAMPE A DECHARGE POUR DECHARGES DELIMITEES DIELECTRIQUEMENT AVEC ELEMENTS D'APPUI PLACES ENTRE UNE PLAQUE DE FOND ET UNE PLAQUE DE COUVERTURE

(30) Priorität: 28.09.2000 DE 10048187
(43) Veröffentlichungstag der Anmeldung: 21.08.2002
(73) Patentinhaber: Patent-Treuhand-Gesellschaft für elektrische Glühlampen mbH, 81543 München (DE)
(72) Erfinder: HITZSCHKE, Lothar, 81737 München (DE); VOLLKOMMER, Frank, 82131 Buchendorf (DE)
(86) Internationale Anmeldenummer: PCT/DE2001/003407
(87) Internationale Veröffentlichungsnummer: WO 2002/027761

(56) Entgegenhaltungen:
- EP-A- 0 389 980
- DE-A- 4 010 809

## Beschreibung

### Technisches Gebiet

Die vorliegende Erfindung bezieht sich auf Entladungslampen, die für dielektrisch behinderte Entladungen ausgelegt sind und auch als stille Entladungslampen bezeichnet werden. Solche Entladungslampen verfügen über einen Elektrodensatz zur Erzeugung von Entladungen in einem Entladungsmedium, das sich in einem Entladungsraum der Lampe befindet. Zwischen zumindest einem Teil des Elektrodensatzes und dem Entladungsmedium ist dabei eine dielektrische Schicht vorgesehen, die die dielektrische Behinderung bildet. Bei Lampen, bei denen festgelegt ist, ob die Elektroden als Kathoden oder Anoden arbeiten, sind zumindest die Anoden dielektrisch vom Entladungsmedium getrennt.

### Stand der Technik

Solche Lampen sind Stand der Technik und genießen in letzter Zeit verstärkte Aufmerksamkeit, vor allem weil sich mit einer gepulsten Betriebsweise (WO 94/23442) relativ hohe Wirkungsgrade erzielen lassen, die eine Verwendung als Quelle sichtbaren Lichts oder auch als UV-Strahler für verschiedene Anwendungsbereiche attraktiv erscheinen lassen. Insbesondere sind dabei Lampen von Interesse, bei denen sich der Entladungsraum zwischen zwei in der Regel planparallelen Platten befindet, die im folgenden als Bodenplatte und als Deckenplatte bezeichnet werden. Dabei ist zumindest die Deckenplatte zumindest teilweise lichtdurchlässig, wobei sie natürlich an ihrer dem Entladungsraum zugewandten Seite eine Leuchtstoffschicht tragen kann, die selbst nicht im eigentlichen Sinn transparent ist. Solche Lampen mit plattenartigem Aufbau sind vor allem als flache Entladungslampen z.B. für Hinterleuchtungszwecke bei Displays, Monitoren und dergleichen interessant.

Um bei größeren Lampenformaten eine ausreichende Stabilität zu gewährleisten, können zwischen der Bodenplatte und der Deckenplatte Stützelemente verwendet werden, die sich innerhalb des Entladungsraums befinden und die Bodenplatte und die Deckenplatte miteinander verbinden. Im Außenbereich können die Platten über einen den Entladungsraum äbschließenden Rahmen verbunden sein, der hier nicht als Stützelement bezeichnet wird. Die Stützelemente verkürzen die Biegelänge zwischen den Außenkanten der Platten, in deren Bereich der beschriebene Rahmen vorgesehen sein kann, und verbessern damit die Stabilität der Lampe gegenüber Biege- und Druckbelastungen. Dabei ist auch zu berücksichtigen, daß stille Entladungslampen häufig mit einem Entladungsmedium mit Unterdruck gefüllt sind, so daß auf den Platten ein im allgemeinen größerer Teil des äußeren Atmosphärendruckes lastet.

### Darstellung der Erfindung

Ausgehend von diesem Stand der Technik liegt der Erfindung das Problem zugrunde, eine stille Entladungslampe der beschriebenen Art mit verbesserten Stützelementen anzugeben.

Dementsprechend sieht die Erfindung vor: eine Entladungslampe mit einer Bodenplatte, einer Deckenplatte für den Lichtaustritt, die zumindest teilweise lichtdurchlässig ist, einem Entladungsraum zwischen der Boden- und der Deckenplatte zur Aufnahme eines Entladungsmediums, einem Elektrodensatz zur Erzeugung dielektrisch behinderter Entladungen in dem Entladungsmedium, einer dielektrischen Schicht zwischen zumindest einem Teil des Elektrodensatzes und dem Entladungsmedium und zumindest einem Stützelement, das eine Verbindung der Bodenplatte und der Deckenplatte herstellt, dadurch gekennzeichnet, daß das Stützelement ein Stützvorsprung ist, der als einstückiger Bestandteil der Deckenplatte ausgebildet ist, und die Außenkontur des Stützvorsprungs sich in der Richtung von der Deckenplatte zu der Bodenplatte in zumindest einer zu der Bodenplatte senkrechten Schnittebene verjüngt.

Ferner bezieht sich die Erfindung auf eine Anzeigeeinrichtung mit einer solchen Entladungslampe, also beispielsweise einen flachen Bildschirm, ein Display oder dergleichen in LCD-Technologie.

Die Erfindung geht zunächst in Abweichung vom einschlägigen Stand der Technik, bei dem die Stützelemente als separate Glaskugeln zwischen die Platten gesetzt werden, den Weg, die Stützelemente als integrierte Bestandteile der Deckenplatte auszubilden. Es handelt sich also um zur Bodenplatte ausgerichtete Vorsprünge der Deckenplatte, die einstückiger Bestandteil der Deckenplatte sind. Vorzugsweise wird die Deckenplatte bereits mit diesen Vorsprüngen mit einem geeigneten Formgebungsverfahren hergestellt, z.B. tiefgezogen oder gepreßt. Die Vorsprünge können jedoch auch nachträglich angeformt werden. Wesentlich ist jedoch, daß die Deckenplatte bei der Montage der Lampe einstückig mit ihr ausgebildete Stützvorsprünge aufweist. Bei der Lampenmontage sollte dann der Aufwand für die Positionierung und Fixierung von separaten Stützelementen zwischen den Platten entfallen. Es kann jedoch beispielsweise zur Befestigung der Stützvorsprünge auf der Bodenplatte sinnvoll sein, ein Verbindungselement - etwa aus Glaslot - zwischen der Bodenplatte und den Stützvorsprüngen vorzusehen.

Weiterhin liegt der Erfindung der Gedanke zugrunde, daß eine einstückige Ausbildung von Abstandselementen mit der Bodenplatte, die sich als Fortentwicklung aus den zunächst mit der Bodenplatte zu verbindenden konventionellen Stützkugeln ergibt, deswegen ungünstiger ist, weil sich durch den Kontakt zwischen den Stützelementen und der Platte Schatten in der Leuchtdichteverteilung ergeben, die die Homogenität beeinträchtigen. Es hat sich herausgestellt, daß diese Schatten um so ausgeprägter sind, je kleiner der Abstand der die Schatten verursachenden Kontakte zur Lichtabstrahlungsebene der Deckenplatte ist. Daher wird es als günstiger angesehen, solche Kontakte zwar nicht völlig zu vermeiden, jedoch möglichst tiefliegend, d.h. entfernt von der Lichtabstrahlungsseite, anzuordnen. Dadurch verschwimmen die Schatten stärker in der Leuchtdichteverteilung der Lampe, insbesondere dann, wenn an der Oberseite oder oberhalb der Deckenplatte noch Diffusoren oder andere die Leuchtdichte homogenisierende Elemente verwendet werden. Je größer der Abstand zwischen solchen Diffusoren und ähnlichen Elementen und den schattenverursachenden Strukturen, um so besser lassen sich die Schatten flächig verteilen bzw. wieder auflösen.

Desweiteren sieht die Erfindung vor, daß sich die Stützvorsprünge von der Deckenplatte aus zu der Bodenplatte in einer sich verjüngenden Form erstrecken. Die Verjüngung soll dabei in zumindest einer Querschnittsebene auftreten, die zu der Bodenplatte senkrecht durch den Stützvorsprung verläuft. Dabei müssen die Platten nicht unbedingt plan und parallel zueinander sein. Der Begriff "senkrecht" ist gegebenenfalls lokal zu verstehen. Mit Verjüngung ist gemeint, daß die Erstreckung des Stützvorsprungs in Richtung längs der Platten (auch "längs" ist gegebenenfalls lokal zu verstehen) in der Querschnittsfläche im Bereich knapp über der Bodenplatte geringer ist als in einem weiter von der Bodenplatte entfernten Bereich. Der Stützvorsprung soll also in Richtung auf die Bodenplatte zu schmaler werden. Dabei kann die Verjüngung vorzugsweise die gesamte Höhe des Stützvorsprungs erfassen.

Durch diese Formgebung lassen sich verschiedene Vorteile erzielen, die nicht zwangsläufig parallel vorliegen müssen. Zum einen ergeben im Bereich des Kontakts zur Bodenplatte schlankere Stützvorsprünge kleinere Schattenwirkungen. Zum zweiten lassen sich jedenfalls dann, wenn über der Bodenplatte mit dem gepulsten Betriebsverfahren einzelne lokalisierte Entladungsstrukturen erzeugt werden, diese Entladungsstrukturen bei der Auslegung der Lampe weitgehend unbeeinflußt von den Stützvorsprüngen über der Bodenplatte verteilen. Aus diesem Grund kann eine gute Homogenität der Leuchtdichte und eine relativ dichte Anordnung mit den Entladungsstrukturen erzielt werden. Zum dritten können solche Stützstellenformen auch für optische Eigenschaften der Deckenplatte von Bedeutung sein, wie dies im folgenden Verlauf der Beschreibung noch deutlicher wird.

Die Grundidee der Erfindung richtet sich auf die Struktur eines einzelnen Stützvorsprungs. Die Erfindung betrifft bevorzugt natürlich Entladungslampen mit einer Vielzahl von Stützvorsprüngen. Insbesondere wird bei der Erfindung nicht zwangsläufig angestrebt, die Zahl der Stützvorsprünge möglichst gering zu halten, wie dies im Stand der Technik der Fall ist. Vielmehr richtet sich die Erfindung auf solche Lampen, bei denen eine relativ große Zahl, beispielsweise eine der Zahl der Einzelentladungsstrukturen vergleichbare Zahl von Stützvorsprüngen Verwendung findet. Vorzugsweise gelten dabei die vorstehenden Aussagen für die meisten oder alle diese Stützvorsprünge. Im allgemeinsten Sinn muß jedoch nur ein Stützvorsprung vorhanden oder erfindungsgemäß beschaffen sein.

Um zusätzliche Abschattungen zu vermeiden und mögliche positive optische Wirkungen der Stützvorsprünge auszunutzen, bestehen diese vorzugsweise aus optisch durchlässigem Material. Dabei können sie allerdings ganz oder teilweise mit einem Leuchtstoff beschichtet sein, wie dies auch bei der übrigen Deckenplatte der Fall ist. Vorzugsweise bestehen die Stützvorsprünge und der Rest der Deckenplatte aus Glas.

Vorzugsweise ist die Formgebung der Stützvorsprünge so ausgelegt, daß sich nicht nur eine Querschnittsebene mit sich verjüngendem Querschnitt ergibt, sondern vielmehr auch keine Querschnittsebene existiert, in der sich der Stützvorsprung in Richtung auf die Bodenplatte zu wesentlich verbreitert. In anderen Worten ausgedrückt bedeutet dies, daß die Außenfläche der Stützvorsprünge dem Entladungsraum der Bodenplatte zugewandt ist, jedenfalls der wesentliche Teil der Außenfläche. Es kann auch einzelne Bereiche der Außenfläche geben, die senkrecht zur Bodenplatte verlaufen, jedoch nicht über einen wesentlichen Teil des Umfangs der Stützvorsprünge. Dabei erstreckt sich die Außenfläche von der Bodenplatte bis zur Deckenplatte, es ist hier also nicht von einem kleinen Teilbereich der Außenfläche die Rede.

Die Außenfläche des Stützvorsprungs soll zu einer den Stützvorsprung schneidenden und zumindest lokal parallel zur Bodenplatte zwischen der Deckenplatte und der Bodenplatte verlaufenden Ebene einen Winkel von vorzugsweise zumindest 120°, besser zumindest 130° und im günstigsten Fall 140° oder darüber bilden, wobei dieser Winkel in einer zu der genannten Ebene senkrechten Schnittebene und in Richtung zu der Bodenplatte hin definiert ist. Der Winkel bezieht sich als stumpfer Winkel also auf eine zu der Bodenplatte hin gekippte Außenfläche des Stützvorsprungs. Mit solchen schrägliegenden Außenflächen kann einerseits Platz für die Entladungen noch in der Nähe der der Bodenplatte benachbarten Unterseite des Stützvorsprungs geschaffen werden, zum anderen haben diese schrägen Außenflächen Bedeutung für eventuelle optische Funktionen der Stützvorsprünge.

Wenn nämlich die erfindungsgemäßen Stützvorsprünge von den beschriebenen schrägverlaufenden Außenflächen begrenzt werden, so sorgen sie durch Brechung von aus dem Entladungsraum auftreffendem Licht oder durch entsprechende Ausrichtung der Abstrahlcharakteristik einer Leuchtstoffschicht auf der Außenfläche für eine Ausrichtung von Licht in den Kernbereich der Stützvorsprünge. Damit kann dem durch den Kontakt zur Bodenplatte entstehenden Schatten entgegengewirkt werden.

Ferner kann zusammen mit einem durch die Elektrodenstruktur vorgegebenen Muster von Einzelentladungen in einer Gesamtauslegung der Stützvorsprungsanordnung und der Entladungsstruktur eine Optimierung auf eine möglichst homogene Leuchtdichte vorgenommen werden. Neben der Schattenwirkung des Kontakts zwischen Stützvorsprung und Bodenplatte ist nämlich auch zu berücksichtigen, daß die Einzelentladungsstrukturen typischerweise nicht unter, sondern zwischen Stützvorsprüngen brennen. Damit liegen die Maxima der UV-Erzeugung ebenfalls zwischen den Stützvorsprüngen. Durch die optische Umlenkwirkung kann das Licht zum Teil aus diesen Bereichen in die Bereiche der Stützvorsprünge gebracht werden, so daß sich an der Oberseite der Deckenplatte eine relativ homogene Leuchtdichte ergibt. Der Grundgedanke der Erfindung besteht an dieser Stelle also abweichend vom Stand der Technik darin, die Stützvorsprünge nicht als Störungen der separat zu homogenisierenden Leuchtdichte der Entladungsstruktur zu betrachten. Vielmehr nehmen die Stützvorsprünge bei der Erfindung vorzugsweise eine aktive Rolle bei der Lichtverteilung ein und werden in der Gesamtauslegung genauso berücksichtigt wie die in sich ebenfalls inhomogene Entladungsverteilung. Die Ausführungsbeispiele machen den hier angesprochenen Aspekt der Erfindung anschaulicher.

Soweit in dieser Anmeldung von Einzelentladungen oder Entladungsstrukturen die Rede ist, beziehen sich diese Aussagen genaugenommen auf durch die Auslegung der Lampe, insbesondere der Elektroden und der Stützvorsprünge vorgegebene Bereiche, in denen solche einzelne Entladungsstrukturen brennen können. Je nach Betriebszustand der Lampe sind dabei jedoch auch unterschiedlich ausgedehnte Entladungsstrukturen innerhalb dieser Bereiche denkbar. Die Bereiche müssen also nicht notwendigerweise vollständig von einer Entladungsstruktur ausgefüllt sein. Vor allem kann es im Zusammenhang mit Dimmfunktionen der Lampe erwünscht sein, die Größe der Entladungsstrukturen zu beeinflussen. Die Aussagen in dieser Anmeldung betreffen also die Bereiche, die maximal von Entladungsstrukturen ausgefüllt werden können. Sofern Elektrodenstrukturen zur Festlegung von Vorzugspositionen der Entladungen vorgesehen sind, wird im allgemeinen eine 1:1-Entsprechung mit den Entladungsbereichen bestehen.

Wie bereits angesprochen sollen sich die Stützvorsprünge in Richtung auf die Bodenplatte zu verjüngen. Optimal ist es dabei, wenn die Stützvorsprünge im Bereich des Kontakts zu der Bodenplatte möglichst schmal sind, wobei sich der Begriff "schmal" im Verhältnis zu den sonstigen Abmessungen des Stützvorsprungs bemißt. "Schmal" ist dabei eine einen kleinen Bruchteil, z.B. weniger als 1/3, 1/4 oder 1/5 einer typischen Querabmessung (längs der Platten) des Stützvorsprungs, beispielsweise auf halber Höhe des Entladungsraums, bildende Strecke. Diese Schmalheit sollte dabei in zumindest einer Richtung vorliegen, vorzugsweise jedoch in zwei Richtungen in der "lokalen" Ebene der Bodenplatte. Es kann sich also in anderen Worten um eine linienhaft schmale oder angenähert punktförmige Kontaktfläche handeln.

Ganz allgemein können die Stützvorsprünge, auch bei etwas größeren Anlageflächen zur Bodenplatte, im wesentlichen rippenartig entlang der Deckenplatte verlaufen oder im Verhältnis zu den Abmessungen der Platten auf kleine Bereiche begrenzt sein. Im erstgenannten Fall hat man es bei schmalen Kontaktflächen im allgemeinen mit den linienhaften Kontaktflächen zu tun, im zweiten Fall mit den angenähert punktförmigen. Die rippenartigen Stützvorsprünge können bestimmte Stabilisierungsfunktionen haben, beispielsweise die Deckenplatte mit einer verbesserten Biegesteifigkeit in einer Richtung versehen. Ferner können sie, wie bei den Ausführungsbeispielen noch näher erläutert, auch dazu dienen, bestimmte Bereiche im Entladungsraum etwas voneinander zu trennen, um Einfluß auf die Entladungsverteilung zu nehmen. Sie können also zusammen mit der Elektrodenstruktur Vorzugsplätze für Einzelentladungen definieren und Einzelentladungen entlang gleicher Elektroden voneinander trennen. Andererseits bieten die in zwei Richtungen der Plattenebene lokal begrenzten Stützvorsprünge die Möglichkeit minimierter Schattenwirkungen und reichen in der Regel für die Stützfunktion aus.

Eine bevorzugte Form für lokal begrenzte Stützvorsprünge kann somit durch einen Kegel oder durch eine Pyramide gebildet werden, bei der die Spitze die Bodenplatte berührt (und dabei eventuell etwas abgeflacht oder verrundet ist). Im Prinzip kommen beliebige Basisformen für die Kegel und Pyramiden in Frage, also beliebige gekrümmt begrenzte Flächen, Polygonflächen oder Mischungen daraus. Bevorzugt sind jedoch weitgehend kantenfreie Stützvorsprünge, also Kegel, weil sich durch die Kanten gewisse Ungleichmäßigkeiten in der Lichtverteilung ausbilden können.

Wie bereits ausgeführt, ist anzustreben, die Kontaktfläche zwischen Stützvorsprüngen und Bodenplatte möglichst klein zu halten. Dabei können durch Herstellungsverfahren (Verrundung bei der Glasformgebung) oder durch die mechanische Punktbelastung der Bodenplatte bedingte Grenzen existieren, so daß es nicht zu einer eigentlich "spitzen" Anlage eines Stützvorsprungs gegen die Bodenplatte kommt, vielmehr eine leichte Verrundung oder Abflachung existiert. Solange diese Verrundung oder Abflachung im Verhältnis zu den Größenabmessungen des Stützvorsprungs nicht wesentlich ins Gewicht fällt, wird dadurch der Grundgedanke der "Schmalheit" nicht beeinträchtigt.

Allerdings bildet es ein bevorzugtes Merkmal der Erfindung, die Kontaktfläche zwischen dem Stützvorsprung und der Bodenfläche dadurch möglichst gering zu halten, daß sie aus einer nur berührenden Anlage folgt. Es soll in anderen Worten also auf Verklebungen, Glaslot und dergleichen, wodurch sich die Kontaktfläche zwangsläufig etwas vergrößern würde, möglichst verzichtet werden. Im übrigen haben solche Zusätze gewöhnlich den Nachteil, daß sie bei der Lampenherstellung bei Erwärmung Gase freisetzen und damit zur Reinhaltung des Entladungsmediums umfangreiche Pumpvorgänge notwendig sind. Wird erfindungsgemäß auf solche Stoffe verzichtet, vereinfacht sich die Herstellung deutlich. Bei der berührenden Anlage ist jedoch nicht ausgeschlossen, daß die Stützvorsprünge in andere, ohnehin notwendige Schichten etwas eingedrückt werden, beispielsweise in Reflexionsschichten oder Leuchtstoffschichten auf der Bodenplatte. Ähnliches kann für eine Leuchtstoffbeschichtung der Stützvorsprünge selbst gelten.

Diese rein berührende Anlage zwischen Stützvorsprüngen und Bodenplatte reicht im allgemeinen für die angestrebte Stabilisierungswirkung aus, weil mechanische Beanspruchungen, die die Platten voneinander wegdrücken, in der Regel nicht auftreten. Dies gilt insbesondere für den technisch ohnehin interessantesten Fall, bei dem die Entladungslampe mit einem Entladungsmedium unter Unterdruck betrieben wird. Dann werden die Stützvorsprünge durch den äußeren Überdruck gegen die Bodenplatte gepreßt.

Nach einem zusätzlichen Aspekt der Erfindung ist vorgesehen, daß die Stützvorsprünge zwischen der Bodenplatte und der Deckenplatte als Vielzahl vorgesehen sind. Damit weicht die Erfindung zusätzlich vom Stand der Technik ab, bei dem versucht wurde, eine möglichst geringe Zahl von Stützelementen zu verwenden. Die Erfinder haben verifiziert, daß sich bei entsprechend häufiger Abstützung vergleichsweise dünne Boden- und Deckenplatten verwenden lassen, so daß sich für die Gesamtlampe eine erhebliche Gewichtseinsparung realisieren läßt. Das Gesamtgewicht der Lampe ist jedoch für viele Anwendungen von erheblicher Bedeutung. Außerdem lassen sich bei leichteren Platten auch das Montageverfahren und dafür eventuell benötigte automatische Montagevorrichtungen deutlich vereinfachen und verbilligen. Im übrigen ist natürlich mit einer größeren Zahl von Stützvorsprüngen auch eine verbesserte Stabilität zu erreichen. Ferner verkürzen sich die Prozeßzeiten bei der Herstellung, weil dünnere Plattenmaterialien und damit kleinere thermische Kapazitäten auftreten.

Dabei sollen die Stützvorsprünge in einer Zuordnung zu einzelnen lokalisierten Entladungsbereichen in dem Entladungsraum angeordnet sein. Hierzu ist zunächst festzustellen, daß sich die einzelnen lokalisierten Entladungsstrukturen auch ohne diese Erfindung mit dem bereits erwähnten gepulsten Betriebsverfahren eingestellt haben und durch Schaffung von Vorzugsstellen an den Elektroden fest lokalisieren ließen. Die Erfindung ist jedoch nicht auf Lampen mit solchen Vorzugsstellen eingeschränkt. Vielmehr zeigt sich, daß sich gerade durch die Erfindung zwischen den Stützvorsprüngen Vorzugsplätze für Einzelentladungsbereiche ergeben, so daß die konventionellen Strukturen, z.B. nasenartige Vorsprünge an den Kathoden schwächer ausgeprägt sein können. Soweit sich unabhängig von dem eventuellen gepulsten Betriebsverfahren zwischen den erfindungsgemäßen Stützvorsprüngen Einzelentladungsstrukturen oder -bereiche herstellen lassen, bezieht sich die Erfindung auch darauf.

Die Zuordnung zwischen Stützvorsprüngen und Einzelentladungsbereichen soll bei der Erfindung zumindest in soweit vorhanden sein, daß die einzelnen Entladungsbereiche jeweils von gleichen Mustern nächstbenachbarter Stützvorsprünge umgeben sind. Dabei sind natürlich Entladungsbereiche im Randbereich der Entladungslampe, d.h. in der Nachbarschaft des Rahmens bzw. seitlichen Abschlusses des Entladungsgefässes, ausgenommen. Dabei wird angestrebt, das Muster der um einen Entladungsbereich nächstbenachbarten Stützvorsprünge zusammen mit diesem Entladungsbereich so auszulegen, daß sich hier eine schon möglichst weitgehende Homogenisierung der Leuchtdichte gibt. Dann spielt die vergleichsweise große Zahl von Stützvorsprüngen keine nachteilige Rolle für die Homogenität, (vergleiche obenstehende Erläuterungen zur Gesamtauslegung der Entladungslampe). Natürlich können einzelne Stützvorsprünge zu mehr als einem Entladungsbereich nächstbenachbart sein, dies wird sogar der Regelfall sein.

Auch ist es bevorzugt, daß die Stützvorsprünge ihrerseits möglichst jeweils vom gleichen Muster nächstbenachbarter Entladungsbereiche umgeben sind.

Schließlich ist bevorzugt, daß sich durch den Entladungsraum zwischen Bodenplatte und Deckenplatte eine Ebene und in dieser Ebene eine Richtung finden lassen, entlang der sich die Stützvorsprünge und die Entladungsbereiche abwechseln. Bei der abwechselnden Reihe muß es sich nicht um eine unmittelbar eines um das andere abwechselnde Reihe (nach dem Muster a-babab....) handeln. Inbegriffen ist ebenfalls eine Reihe, in der nacheinander regelmäßig zwei Stützvorsprünge oder zwei Entladungsbereiche auftreten, solange jeder Stützvorsprung und jeder Entladungsbereich zumindest einen Entladungsbereich bzw. zumindest einen Stützvorsprung als Nachbar hat (also z.B. abbabbabb... oder aabbaabb....).

Sie müssen in dieser Richtung der abwechselnden Reihe nicht unbedingt streng kollinear liegen, sondern können auch etwas zickzackförmig verteilt sein. Vorzugsweise existiert in dieser Ebene eine Vielzahl solcher Reihen, die zueinander parallel sind. Bevorzugt ist ferner, daß es in der Ebene eine zu der erstgenannten Richtung nicht parallel liegende zweite Richtung gibt, entlang der sich ebenfalls eine abwechselnde Reihe aus Stützvorsprüngen und Entladungsbereichen ergibt. Vorzugsweise handelt es sich dabei sowohl um einen Satz paralleler Reihen in der ersten Richtung als auch um einen weiteren Satz paralleler Reihen in der zweiten Richtung. Damit ergibt sich also insgesamt ein aus Stützvorsprüngen und Entladungsbereichen abwechselnd aufgebautes Flächenmuster, beispielsweise eine Schachbrettanordnung.

Bei der obigen Definition ist es überdies bevorzugt, daß die Richtung, entlang der sich die abwechselnde Reihe ergibt, die Zentren nächstbenachbarter oder höchstens übernächstbenachbarter Entladungsbereiche oder die Zentren nächst- oder übernächstbenachbarter Stützelemente verbindet. Ferner ist bevorzugt, daß bei streifenartigen Elektroden auf einer Streifenseite liegende benachbarte Entladungsbereiche jeweils durch Stützvorsprünge getrennt sind.

Wie bereits erläutert, besteht ein Hauptaspekt der Erfindung darin, die Stützvorsprünge als zu der Homogenisierung der Leuchtdichteverteilung beitragenden Bestandteil der Entladungslampe aufzufassen. Dieser Aspekt ist bei der vorzugsweise relativ großen Zahl von Stützvorsprüngen besonders wichtig. Dabei können im Prinzip regelmäßig auftretende Abschattungen durch Stützvorsprünge, solange sie von ausreichend vielen Einzelentladungen umgeben sind, durch Diffusoren oder andere homogenisierende Maßnahmen genauso gut ausgeglichen werden, wie dies konventionellerweise für die wenigen verwendeten Stützvorsprünge der Fall war. Des weiteren können die Stützvorsprünge aber auch, wie bereits erläutert, selbst zur Lichtsteuerung herangezogen werden, wozu sie aus optisch durchlässigem Material bestehen. Zwar können die Stützvorsprünge auch mit einer Leuchtstoffbeschichtung versehen sein, jedoch können sie auch (gegenüber dem Rest der Deckenplatte) von Leuchtstoff ganz oder teilweise frei sein, z.B. nachträglich freigewischt sein. Hierdurch können sie zusätzlich aufgehellt werden, weil die unvermeidliche Extinktion der Leuchtstoffschicht wegfällt. Schließlich sind bei dieser Erfindung solche Entladungslampen bevorzugt, die für einen bipolaren Betrieb ausgelegt sind, bei denen die Elektroden also abwechselnd als Anoden und als Kathoden fungieren. Durch einen bipolaren Betrieb überlagern sich die an sich im allgemeinen asymmetrischen Entladungsstrukturen zu einer im zeitlichen Mittel symmetrischen Verteilung, weswegen sich die optische Homogenisierung weiter verbessern läßt.

### Beschreibung der Zeichnungen

Im folgenden wird anhand der Ausführungsbeispiele eine konkretere Beschreibung der Erfindung gegeben. Dabei offenbarte Einzelmerkmale können auch in anderen als den dargestellten Kombinationen erfindungswesentlich sein. Außerdem beziehen sich die Einzelmerkmale in der vorstehenden und der folgenden Beschreibung auf Vorrichtungs- und auf Verfahrensaspekte der Erfindung. Im einzelnen zeigt
Fig. 1 eine schematisierte Draufsicht auf eine erfindungsgemäße Anordnung von Einzelentladungen und Stützvorsprüngen;
Fig. 2 eine Querschnittsdarstellung der Anordnung aus Fig. 1 entlang der Linie A-A in Fig.1;
Fig. 3 eine Draufsicht auf einen Elektrodensatz einer erfindungsgemäßen Entladungslampe mit symbolisierten Kontaktstellen der Stützvorsprünge mit der Bodenplatte, und zwar entsprechend der Anordnung aus den Figuren 1 und 2;
Fig. 4 eine Fig. 1 entsprechende Darstellung eines zweiten Ausführungsbeispiels;
Fig. 5 eine den Fig. 1 und 4 entsprechende Darstellung eines dritten Ausführungsbeispiels.

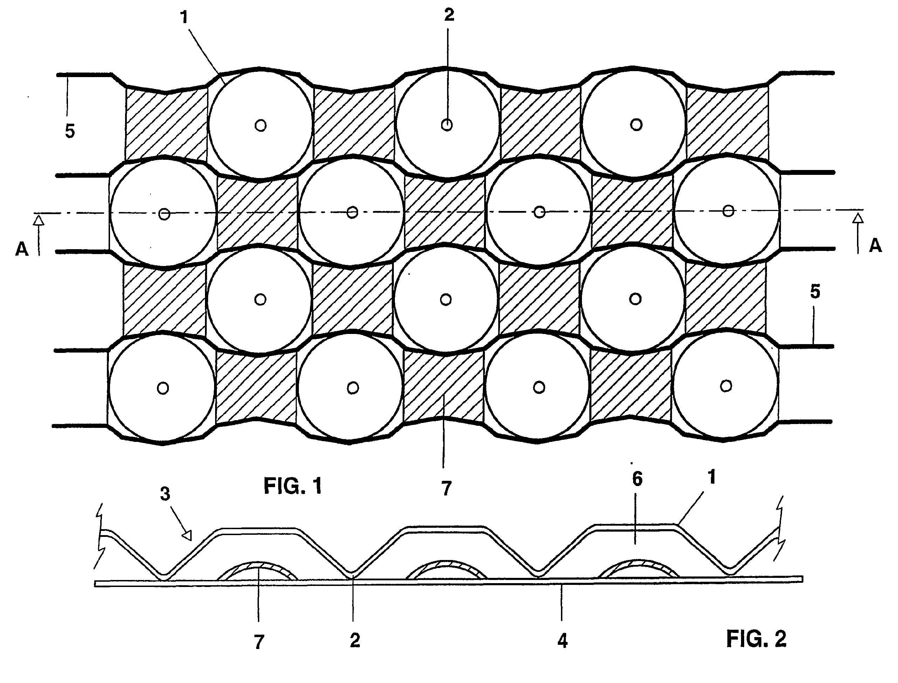

Fig. 1 zeigt eine schematisierte Draufsicht auf eine schachbrettmusterartige Anordnung aus Stützvorsprüngen und Einzelentladungsbereichen. Dabei entsprechen die mit 1 bezeichneten Kreise dem kreisförmigen Ansatz eines Stützvorsprungs an der in der Querschnittsansicht (A-A) in Fig. 2 oben liegenden Deckenplatte 3, die sich in Fig. 2 als Kante darstellen. Mit 2 sind die nach unten, d.h. zur Bodenplatte 4 hin weisenden Spitzen der kegelförmigen Stützvorsprünge bezeichnet, die also in Fig.1 die Kreismittelpunkte bilden.

Bei diesem Ausführungsbeispiel handelt es sich bei der Deckenplatte 3 um eine tiefgezogene Glasplatte. Die Oberseite der Deckenplatte 3 ist demzufolge in der Kontur weitgehend wie die Unterseite der Deckenplatte 3 geformt. Dies ist jedoch nicht unbedingt notwendig. Die Oberseite der Deckenplatte 3 könnte auch plan sein (oder abweichende Formen aufweisen). Neben den Gesichtspunkten der optischen Wirkung der Form der Deckenplatte 3, also insbesondere der Stützvorsprünge, sind dabei vor allem Kriterien der günstigen Herstellbarkeit zu beachten.

Fig. 2 zeigt, daß die tiefgezogenen kegelförmigen Stützvorsprünge relativ flach verlaufende Seitenflächen aufweisen. Tatsächlich ist in Fig. 2 die vertikale Dimension übertrieben dargestellt, so daß die Stützvorsprünge tatsächlich noch flacher sind als abgebildet. Sie definieren mit einer Waagerechten einen (zur Bodenplatte hin zu verstehenden) Winkel von deutlich über 120°, beispielsweise von über 130° oder sogar über 140°. Dementsprechend ist der Winkel zwischen diesen Seitenflächen und der Bodenplatte klein, liegt also unter 60°, und vorzugsweise sogar unter 50° bzw. unter 40°.

Mit 5 sind in Fig. 1 Elektrodenstreifen bezeichnet, bei denen zwischen Anoden und Kathoden kein Unterschied besteht, die also sämtlich durch eine dielektrische Schicht von dem zwischen der Deckenplatte 3 und der Bodenplatte 4 gebildeten Entladungsraum getrennt sind. Der Entladungsraum ist in Fig. 2 mit 6 bezeichnet. Die Elektrodenstreifen 5 weisen aus geraden Streckenabschnitten zusammengesetzt zackenförmig bzw. wellenartig verlaufende Formen auf. Kurze Streckenabschnitte der Elektrodenstreifen 5 zwischen nächstbenachbarten Stützvorsprüngen sind relativ zur Hauptstreifenrichtung geneigt und sorgen für eine Trennung der Entladungsbereiche, die in den Fig. 1 und 2 mit 7 bezeichnet sind. Wenn man diese Abschnitte weglassen würde, würden sich die Entladungsbereiche 7 gerade berühren. Zwischen diesen schrägstehenden Streckenabschnitten bilden die Elektrodenstreifen im Bereich der Entladungsbereiche 7 selbst schwach ausgeprägte Sägezahnformen, wobei die Spitze des Sägezahns jeweils mittig liegt. Diese Elektrodenformen sind von Bedeutung für die Lokalisierung einzelner Entladungen im Bereich kürzester Entladungsabstände, d.h. zwischen entsprechenden vorspringenden Spitzen der Elektrodenstreifen 5. Bei diesem Ausführungsbeispiel wird in jedem Entladungsbereich 7 eine in ihrer Ausdehnung veränderliche, unter Umständen auch in mehrere Entladungsstrukturen aufgeteilte Einzelentladung brennen.

Das Ausführungsbeispiel verdeutlicht, daß sowohl die Stützvorsprünge 1, 2 einerseits als auch die Entladungsstrukturen 7 andererseits jeweils von gleichen Nächstnachbar-Anordnungen (der Einzelentladungen 7 bzw. der Stützvorsprünge 1,2) umgeben sind. Davon ausgenommen sind lediglich am Rand der Entladungslampen angeordnete Positionen.

Es zeigt sich, daß die in Fig. 1 eingezeichnete Schnittlinie A-A abwechselnd durch Stützvorsprünge 1, 2 und Entladungsstrukturen 7 verläuft. Dem entspricht die Darstellung in Fig. 2. Durch die rechtwinklig schachbrettmusterartige Anordnung ergibt sich hier eine einfache Anordnung mit einer Vielzahl nebeneinander liegender Richtungen dieser abwechselnden Reihen, und zwar in dem in Fig. 1 gezeichneten Ausschnitt aus einer größeren Lampenstruktur vier waagerechte Reihen und sieben senkrechte Reihen. In Fig. 2 ist zu erkennen, daß die einzelnen Entladungsstrukturen 7 bei anderen Elektrodenformen auch bis in den Bereich unter den Stützvorsprüngen 1, 2 der Deckenplatte 3 hineinreichen könnten. Dies gilt im übrigen auch für einen hier nicht dargestellten Schnitt entlang einer durch die Stützvorsprungspitzen 2 verlaufenden vertikalen Linie in Fig. 1. In Fig. 1 sind die einzelnen Entladungsstrukturen 7 durch angenäherte Quadrate wiedergegeben. Tatsächlich kann die Form der einzelnen Entladungen 7 auch anders ausfallen.

Die hier dargestellten Elektrodenstreifen 5 haben im übrigen einen Verlauf, der neben der lokalen Festlegung der einzelnen Entladungsstrukturen auch gute Eigenschaften bezüglich der Dimmbarkeit der Entladungen hat, wozu auf die beiden Anmeldungen D 198 44 720 und DE 198 45 228 verwiesen wird. Die Dimmfunktion geht einher mit einer Veränderung der Flächenausdehnung der einzelnen Entladungsstrukturen 7, so daß diese auch kleiner als in Fig. 1 und 2 dargestellt sein können. Im übrigen erkennt man, daß die Stützvorsprünge 1, 2 die Entladungsstrukturen 7, die zwischen den selben Elektrodenstreifen 5 angeordnet sind, voneinander trennen. Wegen der Trennungsfunktion der Stützvorsprünge 1, 2 ist die Zackenform der Elektrodenstreifen 5 bei diesem Ausführungsbeispiel auch nur vergleichsweise gering ausgeprägt, und zwar im Bezug auf den Entladungsabstand, also den Abstand zwischen den Elektrodenstreifen 5.

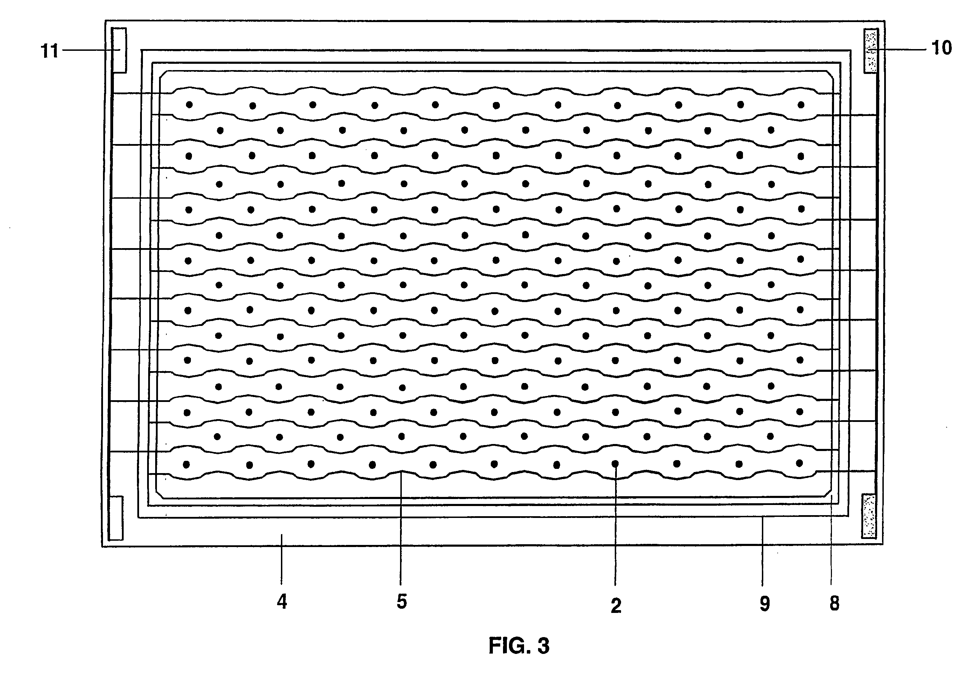

Fig. 3 zeigt eine Fig. 1 entsprechende Draufsicht auf die Bodenplatte 4 mit dem Satz Elektroden 5. Hierbei ist jedoch eine vollständige Entladungslampe dargestellt, bei der 21 in Fig. 3 vertikale und 15 in Fig. 3 waagerechte Linien mit jeweils abwechselnden Reihen von Stützvorsprüngen 1, 2 und Entladungsstrukturen 7 vorgesehen sind. In Fig. 3 ist die Ebene der Bodenplatte 4 dargestellt, daher zeigen sich die Stützvorsprünge nur mit ihren Spitzen 2 in angenäherter Punktform. Die Entladungsstrukturen 7 sind der Übersichtlichkeit halber nicht eingezeichnet, sitzen jedoch im Betrieb der Entladungslampe so, wie in Fig. 1 und 2 dargestellt. Fig. 3 zeigt ferner, daß die Elektrodenstreifen 5 jeweils alternierend einem in Fig. 3 rechten Sammelanschluß 10 und einem in Fig. 3 linken Sammelanschluß 11 zugeführt sind, um darüber gemeinsam an ein elektronisches Vorschaltgerät angeschlossen zu werden.

Außerdem zeigt Fig. 3 eine rahmenähnliche Struktur 8 im Außenbereich der Bodenplatte 4. Konventionellerweise wurden hier von den Boden- und Deckenplatten separate Glasrahmen verwendet. Bei diesem Ausführungsbeispiel ist jedoch analog zu der Ausbildung der Stützvorsprünge 1, 2 vorgesehen, daß der "Rahmen" 8 ebenfalls ein Vorsprung der Deckenplatte 3 ist, jedoch nicht auf einen Punkt zulaufend kegelförmig, sondern als Rippe. Dabei weist die Kontaktfläche der Rahmenrippe 8 mit der Bodenplatte 4 eine gewisse Breite auf, weil dort eine gasdichte Verbindung der Deckenplatte 3 und der Bodenplatte 4, beispielsweise durch ein Glaslot, vorgesehen werden muß. Im übrigen stören Schattenwirkungen in diesem Bereich nicht, weil es sich ohnehin um den Rand handelt, an dem die Leuchtdichte bereits abnimmt.

Außerhalb der Rahmenrippe 8 liegt in Fig. 3 ferner eine Linie 9, die die Grenze des Rahmens zeigt. Der Rahmen ist außerhalb der Rippe 8 aufgebogen. Unter der Aufbiegung könnten auch die hier außerhalb eingezeichneten E-lektrodenanschlüsse (mit Busstruktur) 10 und 11 geschützt untergebracht sein. Im übrigen muß bei der Bemessung der Rahmenrippe 8 die Stärke des zur Befestigung verwendeten Glaslots gegenüber den nur anliegenden Stützvorsprüngen berücksichtigt werden. Die Leuchtstoffbeschichtung liegt auf der dem Entladungsraum 6 zugewandten Seite der Deckenplatte 3, also in Fig. 2 auf der Unterseite der Deckenplatte 3, und bedeckt die Deckenplatte 3 innerhalb der in Fig. 3 dargestellten Grenze vollständig. Die Mantelflächen der Stützvorsprünge 1, 2 sind also auch mit Leuchtstoff bedeckt.

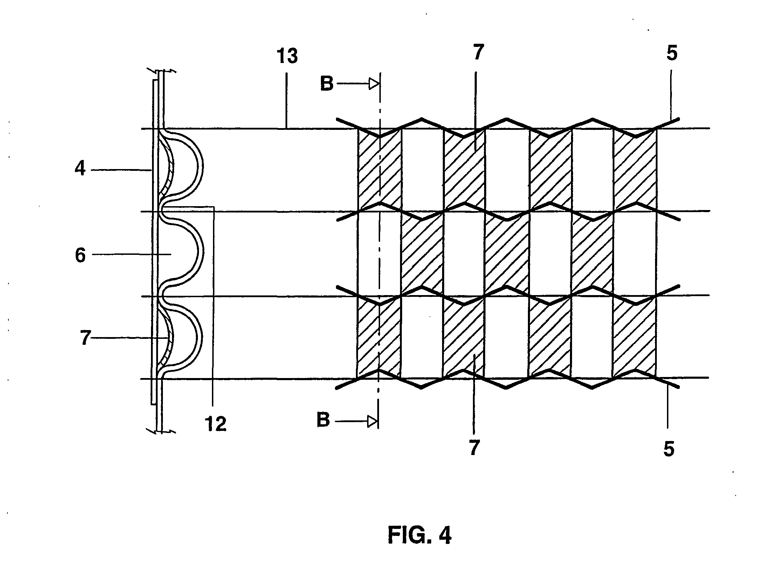

Fig. 4 zeigt eine Variante zu Fig. 1 als zweites Ausführungsbeispiel. Dabei werden die gleichen Bezugsziffern für entsprechende Teile verwendet. Der Unterschied zu dem ersten Ausführungsbeispiel aus den Fig. 1-3 besteht darin, daß die Stützvorsprünge rippenartigen Charakter haben, also entlang einer Linie aufliegen. Daher sind sie bei diesem Ausführungsbeispiel mit 12 bezeichnet. Die Hilfslinien 13 verdeutlichen, daß die linienförmige Auflage der Stützvorsprünge 12 auf der Bodenplatte 4 bei diesem Ausführungsbeispiel im wesentlichen über den Elektrodenstreifen 5 liegt. Die Zickzackform der Elektrodenstreifen 5 dient hierbei dazu, den Elektrodenstreifen alternierend zu den beiden Seiten unter dem jeweiligen Stützvorsprung 12 hervorschauen zu lassen. Daher können zwischen benachbarten Elektrodenstreifen Entladungen 7 brennen, und zwar genau in dem nicht von den Stützvorsprüngen abgedeckten Bereich der Elektrodenstreifen 5.

Bei diesem Ausführungsbeispiel sind also auch von einem bestimmten Elektrodenstreifen 5 zu einer bestimmten Seite ausgehende benachbarte Entladungsstrukturen 7 jeweils durch Stützvorsprünge getrennt. Dieses Merkmal bezieht sich nämlich darauf, daß die Entladungsstrukturen nicht zu einer einzigen Entladungsstruktur zusammenlaufen können. Dies ist im vorliegenden Fall dadurch gewährleistet, daß die Stützvorsprünge 12 die Elektrodenstreifen 5 zwischen solchen benachbarten Einzelentladungen 7 (zwei mal) überdecken. Im Unterschied dazu war das Zusammenlaufen benachbarter einzelner Entladungsstrukturen 7 bei dem vorhergehenden Ausführungsbeispiel durch die räumliche Anordnung der Stützvorsprünge 1, 2 zwischen den Entladungsstrukturen selbst, also zwischen ihren Schwerpunkten, erzielt worden.

Im übrigen unterscheidet sich dieses Ausführungsbeispiel von dem vorherigen dadurch, daß die Stützvorsprünge in dem in Fig. 4 links gezeigten Querschnittsprofil wellenartig ausgebildet sind und dabei in einer etwas abgerundeten Weise in Kontakt mit der Bodenplatte 4 kommt. Durch diese abgerundete Form des Kontakts kann die Funktion der Trennung zwischen den Entladungsbereichen entlang dem selben Elektrodenstreifen 5 besser wahrgenommen werden. Im übrigen ist auch in dieser Querschnittsdarstellung die vertikale Dimension (in der Richtung einer Senkrechten auf der Bodenplatte 4) übertrieben dargestellt. Tatsächlich verlaufen die Strukturen flacher. Jedoch ist der oben bereits mehrfach erwähnte Mindestwinkel von 120° bei diesem Ausführungsbeispiel nicht über die gesamte Höhe der Stützvorsprünge gegeben. Der mittlere Bereich der Stützvorsprünge verläuft tatsächlich etwas steiler. Der obere Bereich und der untere Bereich liegen jedoch im bevorzugten Winkelbereich.

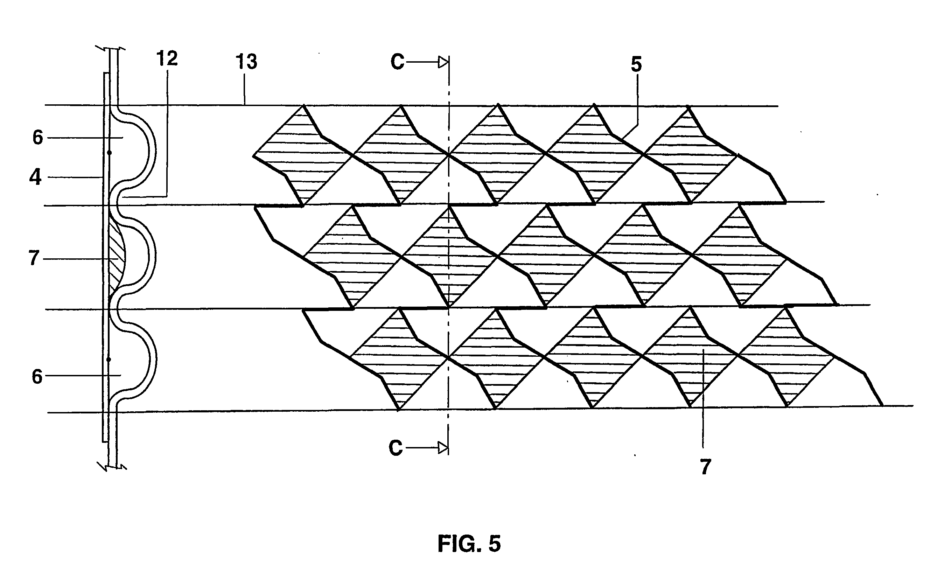

Ein weiteres Ausführungsbeispiel zeigt Fig. 5. Die mit kräftigerem Strich durchgezeichneten Linien stellen Elektrodenstreifen dar, die wiederum mit 5 bezeichnet sind. Bei diesem Ausführungsbeispiel haben die Elektrodenstreifen 5 nicht wie bei den ersten beiden Ausführungsbeispielen eine leichtgezackte, aber ansonsten gerade durchlaufende Form. Vielmehr sind nach einer "Sägezahnperiode" der Elektrodenstreifen 5 schräg rückwärts verlaufende Zwischenabschnitte vorgesehen. Diese Zwischenabschnitte liegen dabei parallel und unter rippenartigen Stützvorsprüngen 12, die im übrigen denen des zweiten Ausführungsbeispiels aus Fig. 4 entsprechen. Die Verläufe sind wiederum mit Hilfslinien 13 angedeutet und im linken unteren Bereich der Fig. 5 in einem Querschnittsprofil entlang der Linie C-C dargestellt. Auch in diesem Fall ist die Berührung der rippenartigen Stützvorsprünge 12 mit der Bodenplatte 4 etwas abgerundet ausgeführt. Dadurch können an den im Kontaktbereich zwischen den Stützvorsprung 12 und der Bodenplatte 4 liegenden Streifenstücken der Elektrodenstreifen 5 Entladungen wirksam vermieden werden. Das ist bei diesem Ausführungsbeispiel von besonderer Bedeutung, weil entlang der Richtung der Stützvorsprünge 12 Nächstnachbarabstände zwischen den Elektrodenstreifen 5 auftreten, die kürzer sind, als an den Stellen, an denen die Entladungsstrukturen 7 tatsächlich brennen sollen. Daher ist diese etwas verrundete (oder alternativ etwas flächige) Auflage der Stützvorsprünge 12 auf der Bodenplatte 4 bei diesem Ausführungsbeispiel günstig, um bestimmte Teile der Elektrodenstreifen 5 zu "sperren".

Wiederum ist in der Schnittdarstellung die vertikale Dimension übertrieben. Auch hier sind die tatsächlichen Strukturen etwas flacher. Für die durch die Stützvorsprünge entlang ihrer Höhe definierten Winkel gelten die Aussagen zu Fig. 4. Allerdings sind bei dieser Ausführungsform die verrundeten unteren Bereiche der Stützvorsprünge 12 noch etwas breiter ausgeführt, um die entsprechenden Abschnitte der Elektrodenstreifen 5 gut abdecken zu können.

Durch die besondere Form der Elektrodenstreifen 5 ergibt sich ein im Vergleich zu den schachbrettartigen Anordnungen des ersten und des zweiten Ausführungsbeispiels sehr dichtes Feld von Einzelentladungen 7. Bei der Schnittdarstellung in Fig. 5 ist die dargestellte Einzelentladung 7 unter einem schrägen Winkel geschnitten. Sie ist daher im Vergleich zu den Schnittdarstellungen der Entladungen in den Fig. 2 und 4 nicht in gleichem Umfang von der Unterlage abgehoben. (Es handelt sich bei der Erfindung im Regelfall nicht um Oberflächenentladungen, sondern im Volumen des Entladungsraumes brennende Entladungen, die gewissermaßen Bögen bilden.) Tatsächlich ist jedoch auch die Entladung 7 in ihrem mittleren Bereich etwas von der Bodenplatte 4 beabstandet, was zeichnerisch nicht mehr dargestellt ist.

Allen drei Ausführungsbeispielen ist gemeinsam, daß sich durch die im Vergleich zu konventionellen Entladungslampen äußerst dichte Anordnung von Stützvorsprüngen eine große Plattenstabilität ergibt. Damit können sowohl die Deckenplatte 3 als auch die Bodenplatte 4 relativ dünnwandig ausgelegt werden. Im übrigen ist bei den Ausführungsbeispielen vorgesehen, wie in Fig. 3 verdeutlicht, keinen separaten Rahmen zwischen Bodenplatte 4 und Deckenplatte 3 zu verwenden. Durch die einstückige Ausführung der Stützvorsprünge mit der Deckenplatte 3 ergeben sich damit ein drastisch reduzierter Montageaufwand und deutlich verkürzte Prozeßzeiten.

Im übrigen haben die bei den Ausführungsbeispielen dargestellten Stützvorsprünge jeweils für die Erfindung wesentliche Formen. Bei allen Ausführungsbeispielen erstrecken sie sich von der Deckenplatte 3 zur Bodenplatte 4 hin in sich verjüngender Weise, wobei die Verjüngung bei den rippenartigen Stützvorsprüngen aus dem zweiten und dem dritten Ausführungsbeispiel quer zur Rippenrichtung erfolgt, bei den kegelförmigen Stützvorsprüngen 1, 2 aus dem ersten Ausführungsbeispiel in jeder zu den Platten senkrechten Querschnittsebene. Dabei treten bei dem ersten Ausführungsbeispiel zwischen der Bodenplatte 4 und den Mantelflächen der Stützvorsprünge Winkel von 40° auf, wobei die Mantelfläche der Stützvorsprünge der Bodenplatte 4 insgesamt zugewandt bleibt. Dies impliziert einen Winkel von 140° zwischen der Mantelfläche und der obenstehend bereits erläuterten bodenplattenparallelen Ebene durch den Entladungsraum, wobei dieser Winkel von 140° der Bodenplatte zugewandt definiert ist.

Wenn, wie bei diesen Ausführungsbeispielen, die Deckenplatte 3 einschließlich der Stützvorsprünge 1, 2 bzw. 12 mit Leuchtstoff beschichtet ist, führt dies dazu, daß die Abstrahlungscharakteristiken der sichtbaren Strahlung so geneigt sind, daß sich eine Aufhellung des durch den Kontakt mit der Bodenplatte 4 bedingten Schattens ergibt. Es wird also Licht aus der Umgebung in das Zentrum des Stützvorsprungs hineingelenkt. Unterstützend können dabei auch optisch wirksame Strukturen auf der Oberseite oder oberhalb der Deckenplatte 3 vorgesehen sein. Diese optisch wirksamen Strukturen können in der Deckenplatte 3 integriert oder als separates Element vorgesehen sein.

Auch wenn die Deckenplatte 3 nicht mit Leuchtstoff beschichtet wäre, ergäbe sich durch Lichtbrechung an den der Bodenplatte 4 schräg zugewandten Mantelflächen der Stützvorsprünge 1, 2 und 12 eine ähnliche Wirkung. Dabei sind die Stützvorsprünge jeweils von einer möglichst gleichmäßigen Anordnung von Entladungsstrukturen 7 umgeben. Bei dem ersten Ausführungsbeispiel ist das dadurch der Fall, daß jeder Stützvorsprung 1, 2 Lichtbeiträge von vier, gleichmäßig um ihn herum verteilten Entladungsstrukturen 7 aufnimmt und sich die Stützvorsprünge 1, 2, vom Rand der Entladungslampe abgesehen, darin nicht unterscheiden. Bei dem zweiten Ausführungsbeispiel in Fig. 4 werden die Stützvorsprungsrippen 12 mit auf Entladungsstrukturen 7 auf beiden Seiten zurückgehenden Lichtbeiträgen versorgt, wobei eine zusätzliche Homogenisierung durch die alternierende Anordnung gegeben ist. Das dritte Ausführungsbeispiel in Fig. 5 ist insoweit noch verbessert, als zusätzlich zu der alternierenden Anordnung die Entladungsstrukturen dichter liegen und sich damit kleinere entladungsfreie Bereiche ergeben.

## Patentansprüche

1. Entladungslampe mit
einer Bodenplatte (4),
einer Deckenplatte (3) für den Lichtaustritt, die zumindest teilweise lichtdurchlässig ist,
einem Entladungsraum (6) zwischen der Boden- und der Deckenplatte zur Aufnahme eines Entladungsmediums,
einem Elektrodensatz (5) zur Erzeugung dielektrisch behinderter Entladungen (7) in dem Entladungsmedium,
einer dielektrischen Schicht zwischen zumindest einem Teil des Elektrodensatzes (5) und dem Entladungsmedium und
zumindest einem Stützelement (1, 2, 12), das eine Verbindung der Deckenplatte (3) und der Bodenplatte (4) herstellt,
**dadurch gekennzeichnet, daß** das Stützelement ein Stützvorsprung (1, 2, 12) ist, der als einstückiger Bestandteil der Deckenplatte (3) ausgebildet ist, und
die Außenkontur des Stützvorsprungs (1, 2, 12) sich in der Richtung von der Deckenplatte (3) zu der Bodenplatte (4) in zumindest einer zu der Bodenplatte (4) senkrechten Schnittebene (A-A, B-B, C-C) verjüngt.

2. Entladungslampe nach Anspruch 1, bei der eine Vielzahl der Stützvorsprünge (1, 2,12) vorgesehen sind.

3. Entladungslampe nach Anspruch 1 oder 2, bei der die Stützvorsprünge (1, 2, 12) im wesentlichen aus lichtdurchlässigem Material bestehen.

4. Entladungslampe nach Anspruch 1, 2 oder 3, bei der die Stützvorsprünge (1, 2,12) zum Entladungsraum (6) eine Außenfläche aufweisen, die sich zumindest im wesentlichen durchgängig der Bodenplatte (4) zugewandt von der Bodenplatte (4) bis zur Deckenplatte (3) erstreckt.

5. Entladungslampe nach einem der vorstehenden Ansprüche, bei der die Außenfläche der Stützvorsprünge (1, 2, 12) zu einer die Stützvorsprünge schneidenden und zumindest lokal parallel zur Bodenplatte zwischen der Deckenplatte (3) und der Bodenplatte (4) verlaufenden Ebene einen Winkel von zumindest 120° bildet, wobei dieser Winkel in einer zu der genannten Ebene senkrechten Schnittebene und in Richtung zu der Bodenplatte (4) hin definiert ist.

6. Entladungslampe nach einem der vorstehenden Ansprüche, bei der der Kontakt zwischen der Bodenplatte (4) und den Stützvorsprüngen (1, 2, 12) im Verhältnis zu den Abmessungen der Stützvorsprünge (1, 2, 12) in zumindest einer Richtung (A-A, B-B, C-C) schmal ist.

7. Entladungslampe nach einem der vorstehenden Ansprüche, bei der die Stützvorsprünge (12) längs der Deckenplatte (3) rippenartig verlaufen.

8. Entladungslampe nach einem der Ansprüche 1-6, bei der die Stützvorsprünge (1, 2) längs der Deckenplatte (3) auf einen im Verhältnis zu den Abmessungen der Deckenplatte (3) sehr kleinen jeweiligen Bereich (1) begrenzt sind.

9. Entladungslampe nach Anspruch 8, bei der die Stützvorsprünge (1, 2) im wesentlichen die Form von Kegeln (1, 2) oder Pyramiden mit die Bodenplatte berührenden Spitzen (2) aufweisen.

10. Entladungslampe nach einem der vorstehenden Ansprüche, bei der die Stützvorsprünge (1, 2,12) an der Bodenplatte (4) nur anliegen.

11. Entladungslampe nach einem der vorstehenden Ansprüche, bei der die Stützvorsprünge (1, 2, 12) an der Außenfläche zum Entladungsraum (6) eine Leuchtstoffbeschichtung aufweisen.

12. Entladungslampe nach einem der vorstehenden Ansprüche, bei der in einer Ebene zwischen der Bodenplatte (4) und der Deckenplatte (3) durch den Entladungsraum (6) eine Richtung (A-A, B-B, C-C) existiert, entlang der sich Stützvorsprünge (1, 2, 12) und Einzelentladungen (7) in einer Reihe abwechseln.

13. Entladungslampe nach Anspruch 12, bei der eine Vielzahl paralleler Reihen aus abwechselnden Stützvorsprüngen (1, 2,12) und Entladungsstrukturen (7) existiert.

14. Entladungslampe nach Anspruch 12 oder 13, bei der der Elektrodensatz eine Anzahl streifenförmiger Elektroden (5) beinhaltet und Entladungsstrukturen (7), die an einem selben Elektrodenstreifen (5) zur selben Seite des Elektrodenstreifens (5) benachbart angeordnet benachbart sind, jeweils durch einen Stützvorsprung (1, 2,12) getrennt sind.

15. Entladungslampe nach Anspruch 13, jedoch nicht nach Anspruch 7, auch in Verbindung mit Anspruch 14, die dazu ausgelegt ist, daß die Stützvorsprünge (1, 2) und die Entladungsstrukturen (7) eine schachbrettartige Anordnung bilden.

16. Entladungslampe nach einem der vorstehenden Ansprüche, bei der der maximale Abstand zwischen direkt benachbarten Stützvorsprüngen (1, 2, 12) höchstens 30 mm beträgt.

17. Entladungslampe nach einem der vorstehenden Ansprüche, bei der auf oder oberhalb der Lichtabstrahlungsseite ein optisches Diffusionselement vorgesehen ist.

18. Entladungslampe nach einem der vorstehenden Ansprüche, die für einen bipolaren Betrieb ausgelegt ist.

19. Anzeigeeinrichtung mit einer Entladungslampe nach einem der vorstehenden Ansprüche, die zur Hinterleuchtung der Anzeigeeinrichtung dient.

## Claims

1. Discharge lamp having a base plate (4), a top plate (3) for the light exit, which is at least partially transparent, a discharge space (6) between the base plate and the top plate for holding a discharge medium, an electrode set (5) for producing dielectrically impeded discharges (7) in the discharge medium, a dielectric layer between at least one part of the electrode set (5) and the discharge medium, and at least one support element (1, 2, 12) which produces a connection between the top plate (3) and the base plate (4), **characterized in that** the support element is a supporting projection (1, 2, 12) which is constructed as a unipartite component of the top plate (3), and the outer contour of the supporting projection (1, 2, 12) tapers in the direction from the top plate (3) toward the base plate (4) in at least one cutting plane (A-A, B-B, C-C) perpendicular to the base plate (4).

2. Discharge lamp according to claim 1, in which a multiplicity of supporting projections (1, 2, 12) are provided.

3. Discharge lamp according to claim 1 or 2, in which the supporting projections (1, 2, 12) substantially consist of transparent material.

4. Discharge lamp according to claim 1, 2 or 3, in which, relative to the discharge space (6), the supporting projections (1, 2, 12) have an outer surface which extends from the base plate (4) up to the top plate (3) at least substantially in a continuous fashion facing the base plate (4).

5. Discharge lamp according to one of the preceding claims, in which the outer surface of the supporting projections (1, 2, 12) forms, in relation to a plane that cuts the supporting projections and runs at least locally parallel to the base plate between the top plate (3) and the base plate (4), an angle of at least 120° this angle being defined in a cutting plane perpendicular to said plane and in the direction of the base plate (4).

6. Discharge lamp according to one of the preceding claims, in which the contact between the base plate (4) and the supporting projections (1, 2, 12) is narrow in relation to the dimensions of the supporting projections (1, 2, 12), in at least one direction (A-A, B-B, C-C).

7. Discharge lamp according to one of the preceding claims, in which the supporting projections (12) run like ribs along the top plate (3).

8. Discharge lamp according to one of claims 1-6, in which the supporting projections (1, 2) are limited along the top plate (3) to a respective region (1) that is very small in relation to the dimensions of the top plate (3).

9. Discharge lamp according to claim 8, in which the supporting projections (1, 2) substantially take the form of cones (1, 2) or pyramids with vertices (2) touching the base plate.

10. Discharge lamp according to one of the preceding claims, in which the supporting projections (1, 2, 12) only bear against the base plate (4).

11. Discharge lamp according to one of the preceding claims, in which the supporting projections (1, 2, 12) have a fluorescent coating on the outer surface facing the discharge space (6).

12. Discharge lamp according to one of the preceding claims, in which there exists in a plane between the base plate (4) and the top plate (3) a direction (A-A, B-B, C-C) through the discharge space (6) along which supporting projections (1, 2, 12) and individual discharges (7) alternate in a row.

13. Discharge lamp according to claim 12, in which a multiplicity of parallel rows of alternating support elements (1, 2, 12) and discharge structures (7) exist.

14. Discharge lamp according to claim 12 or 13, in which the electrode set includes a number of strip-shaped electrodes (5), and discharge structures (7) that are arranged on one and the same electrode strip (5) adjacent to the same side of the electrode strip (5) are separated in each case by a supporting projection (1, 2, 12).

15. Discharge lamp according to claim 13, but not as claimed in claim 7, also in conjunction with claim 14, which is designed to the effect that the projecting elements (1, 2) and the discharge structures (7) form a chessboard-like arrangement.

16. Discharge lamp according to one of the preceding claims, in which the maximum distance between directly adjacent supporting projections (1, 2, 12) is at most 30 mm.

17. Discharge lamp according to one of the preceding claims, in which an optical diffusion element is provided on or above the light-emitting side.

18. Discharge lamp as claimed in one of the preceding claims, which is designed for bipolar operation.

19. A display device having a discharge lamp as claimed in one of the preceding claims, which serves for backlighting the display device.

## Revendications

1. Lampe à décharge comprenant
une plaque (4) de fond ;
une plaque (3) de couverture pour la sortie de la lumière qui est transparente au moins en partie ;
un espace (6) de décharge entre la plaque de fond et la plaque de couverture pour recevoir un milieu de décharge ;
un jeu (5) d'électrodes pour produire des décharges (7) rendues incomplètes par voie diélectrique dans le milieu de décharge ;
une couche diélectrique entre au moins une partie du jeu (5) d'électrodes et le milieu de décharge ; et
au moins un élément (1, 2, 12) d'appui qui ménage une liaison entre la plaque (3) de couverture et la plaque (4) de fond,
**caractérisée en ce que** l'élément d'appui est une saillie (1, 2, 12) d'appui qui fait partie d'un seul tenant de la plaque (3) de couverture, et
le contour extérieur de la saillie (1, 2, 12) d'appui diminue dans la direction allant de la plaque (3) de couverture à la plaque (4) de fond dans au moins un plan (A-A, B-B, C-C) de coupe perpendiculaire à la plaque (4) de fond.

2. Lampe à décharge suivant la revendication 1, dans laquelle il est prévu une pluralité de saillies (1, 2, 12) d'appui.

3. Lampe à décharge suivant la revendication 1 ou 2, dans laquelle les saillies (1, 2, 12) d'appui sont en une matière sensiblement transparente.

4. Lampe à décharge suivant la revendication 1, 2 ou 3, dans laquelle les saillies (1, 2, 12) d'appui ont, vers l'espace (6) de décharge, une surface extérieure qui s'étend de la plaque (4) de fond à la plaque (3) de couverture en étant tournée au moins pour l'essentiel d'une manière générale vers la plaque (4) de fond.

5. Lampe à décharge suivant l'une des revendications précédentes, dans laquelle la surface extérieure des saillies (1, 2, 12) d'appui fait un angle d'au moins 120° avec un plan coupant les saillies d'appui et s'étendant au moins localement parallèlement à la plaque de fond entre la plaque (3) de couverture et la plaque (4) de fond, cet angle étant défini dans un plan de coupe perpendiculaire au dit plan et en allant dans la direction de la plaque (4) de fond.

6. Lampe à décharge suivant l'une des revendications précédentes, dans laquelle le contact entre la plaque (4) de fond et les saillies (1, 2, 12) d'appui est petit par rapport aux dimensions des saillies (1, 2, 12) d'appui au moins dans une direction (A-A, B-B, C-C).

7. Lampe à décharge suivant l'une des revendications précédente, dans laquelle les saillies (12) d'appui s'étendent à la manière de nervures le long de la plaque (3) de couverture.

8. Lampe à décharge suivant l'une des revendications 1 à 6, dans laquelle les saillies (1, 2) d'appui sont délimitées le long de la plaque (3) de couverture à une partie (1) très petite par rapport aux dimensions de la plaque (3) de couverture.

9. Lampe à décharge suivant la revendication 8, dans laquelle les saillies (1, 2) d'appui ont sensiblement la forme de cônes (1, 2) ou de pyramides dont les pointes (2) touchent la plaque de fond.

10. Lampe à décharge suivant l'une des revendications précédentes, dans laquelle les saillies (1, 2, 12) d'appui ne s'appliquent qu'à la plaque (4) de fond.

11. Lampe à décharge suivant l'une des revendications précédentes, dans laquelle les saillies (1, 2, 12) d'appui ont sur la surface extérieure vers l'espace (6) de décharge un revêtement de substance luminescente.

12. Lampe à décharge suivant l'une des revendications précédentes, dans laquelle il existe dans un plan compris entre la plaque (4) de fond et la plaque (3) de couverture dans l'espace (6) de décharge une direction (A-A, B-B, C-C) le long de laquelle alternent en une rangée des saillies (1, 2, 12) d'appui et des décharges (7) individuelles.

13. Lampe à décharge suivant la revendication 12, dans laquelle il existe une pluralité de rangées parallèles de saillies (1, 2, 12) et de structures (7) de décharge en alternance.

14. Lampe à décharge suivant la revendication 12 ou 13, dans laquelle le jeu d'électrodes a un certain nombre d'électrodes (5) en forme de bande et des structures (7) de décharge qui sont voisines en étant disposées au voisinage d'une même bande (5) d'électrode du même côté de la bande (5) d'électrode et sont séparées, respectivement, par une saillie (1, 2, 12) d'appui.

15. Lampe à décharge suivant la revendication 13, mais non suivant la revendication 7, et également en liaison avec la revendication 14, qui est conçue de façon à ce que les saillies (1, 2) d'appui et les structures (7) de décharge sont disposées en damier.

16. Lampe à décharge suivant l'une des revendications précédentes, dans laquelle la distance maximum entre des saillies (1, 2, 12) d'appui directement voisines est au plus de 30 mm.

17. Lampe à décharge suivant l'une des revendications précédentes, dans laquelle il est prévu un élément de diffusion optique sur ou au-dessus du côté d'émission de lumière.

18. Lampe à décharge suivant l'une des revendications précédentes, qui est conçue pour un fonctionnement bipolaire.

19. Dispositif d'affichage ayant une lampe à décharge suivant l'une des revendications précédentes qui sert à l'éclairage par l'arrière du dispositif d'affichage.
